**Europäisches Patentamt**

**European Patent Office**

**Office européen des brevets**

(11) Veröffentlichungsnummer: **0 248 947 B1**

## EUROPÄISCHE PATENTSCHRIFT

(45) Veröffentlichungstag der Patentschrift: **06.03.91**

(51) Int. Cl.5: **B29C 47/02, B29C 47/24**

(21) Anmeldenummer: **86116913.4**

(22) Anmeldetag: **02.12.86**

(54) **Verfahren und Vorrichtung zur Herstellung eines fadenverstärkten Schlauches aus polymerem Werkstoff.**

(30) Priorität: **13.06.86 DE 3619981**

(43) Veröffentlichungstag der Anmeldung:
**16.12.87 Patentblatt 87/51**

(45) Bekanntmachung des Hinweises auf die
Patenterteilung:
**06.03.91 Patentblatt 91/10**

(84) Benannte Vertragsstaaten:
**DE FR GB IT**

(56) Entgegenhaltungen:
**BE-A- 664 351          DE-A- 2 926 223**
**DE-C- 2 559 985        FR-A- 1 072 170**
**FR-A- 2 152 851        GB-A- 2 114 771**
**US-A- 3 405 426        US-A- 3 894 901**
**US-A- 3 981 653        US-A- 4 129 468**
**US-A- 4 172 106        US-A- 4 568 507**

(73) Patentinhaber: **Firma Carl Freudenberg**
**Höhnerweg 2-4**
**W-6940 Weinheim/Bergstrasse(DE)**

(72) Erfinder: **Hempel, Jürgen, Dr. Dipl.-Ing.**
**Beethovenstrasse 6**
**W-6940 Weinheim(DE)**

## Beschreibung

Die Erfindung betrifft ein Verfahren zur Herstellung eines fadenverstärkten Schlauches aus Gummi, bei dem die Ausgangsmischung in formbarem Zustand kontinuierlich fortschreitend in einen Scherkopf eingespeist, mit Hilfe eines Formkernes zu dem Schlauch geformt, durch Aufwickeln eines Verstärkungsfadens und durch Erhitzen auf Vulkanisationstemperatur verfestigt und der Formkern anschließend entfernt wird.

Ein solches Verfahren ist bekannt. Das Aufwickeln des Verstärkungsfadens wird dabei nach der Formung des Schlauches und dem Verlassen des Scherkopfes vorgenommen, was je nach Art des zur Anwendung gelangenden Werkstoffes zu Schwierigkeiten in bezug auf die Erzielung einer guten Einbindung des Verstärkungsfadens in den den Schlauch bildenden Werkstoffkörper führen kann. Es ist daher üblich, druckfeste Schläuche mit einer Gewebearmierung zu umhüllen, wobei sich indessen aus technischen Gründen nur sehr niedrige Arbeitsgeschwindigkeiten erzielen lassen.

Aus der US-A-3,405,426 ist ein Verfahren zur Herstellung eines Schlauches aus einem thermoplastischen Werkstoff bekannt, bei dem in den vorausgehend verflüssigten Werkstoff der Schlauchwandung wendelförmig verlaufende Verstärkungsfäden eingebettet werden. Die Verstärkungsfäden werden dabei durch axiale Öffnungen eines relativ verdrehbaren Teiles in den Ringspalt eingeführt, in dem sich der zuvor verflüssigte Werkstoff befindet. Die Drehbewegung des Teiles an sich vermag zur Verflüssigung des Werkstoffes nichts beizutragen. Eine Übertragung der beschriebenen Verfahrensbedingungen auf die Verarbeitung von vulkanisierbaren Gummimischungen ist nicht möglich.

Aus der FR-A-2 152 851 ist ein Verfahren zur Gummiummantelung eines Kabels bekannt, bei dem eine vulkanisierbare Gummimischung unter Zuhilfsnahme eines Formwerkzeuges an den Außenumfang des Kabels angeformt und durch gleichzeitige Erwärmung vernetzt wird. Das Formwerkzeug enthält weder einen Scherdorn noch sonstige, relativ bewegliche Teile, und es wird angegeben, daß das Kabel unter hoher Spannung steht. Verstärkungsfäden, die in die Wandungen von Schläuchen eingebettet werden, sind keiner höheren Belastung gewachsen.

Der Erfindung liegt die Aufgabe zugrunde, ein Verfahren zur Herstellung eines fadenverstärkten Gummischlauches zu zeigen, das neben einer guten Mengenausbringung eine gute Einbindung des Verstärkungsfadens in den den Schlauch bildenden Werkstoffkörper gewährleistet und es gestattet, den Schlauch in kritischen Anwendungsbereichen zu verwenden, beispielsweise als Bremsschlauch auf dem Gebiet der Kfz-Technik.

Zur Lösung dieser Aufgabenstellung ist es erfindungsgemäß vorgesehen, daß der Verstärkungsfaden innerhalb des Scherkopfes um den Formkern gewickelt und gleichzeitig in die Wandung des Schlauches eingebracht wird, daß die Erhitzung der Ausgangsmischung auf Vulkanisationstemperatur in dem Scherkopf bewirkt wird und daß die Erhitzung so vorgenommen wird, daß sich zum Zeitpunkt des Einbringens des Verstärkungsfadens in die Wandung des Schlauches eine vorübergehende Absenkung der Viskosität der Ausgangsmischung ergibt. Hierdurch ist eine ausgezeichnete Benetzung des Verstärkungsfadens mit dem in einem pastösen bzw. flüssigen Zustand befindlichen Werkstoff gewährleistet und damit die Erzielung einer optimalen Armierung des nach der Verfestigung aus dem Werkstoff gebildeten Schlauchkörpers. Die Einbindung des Vers-[ärkungsfadens in den gebildeten Gummikörper ist in jedem Falle ausgezeichnet und präzise steuerbar. Entsprechend erzeugte Schläuche lassen sich dadurch bedenkenlos auch in kritischen Anwendungsbereichen verwenden, beispielsweise als Bremsschläuche im Bereich der Kfz-Technik.

Auf die Erzeugung von Gewebestrukturen aus dem Verstärkungsfaden kann wahrscheinlich aus diesem Grunde in den meisten Fällen verzichtet und so eine wesentlich verbesserte Mengenausbringung erzielt werden. Auch steht es im freien Ermessen des Anwenders, den Formkern aufeinanderfolgend durch mehrere Scherköpfe hindurchzuleiten und aus einer entsprechend großen Anzahl von fadenverstärkten Schichten aufzubauen. Hierdurch ergibt sich bereits an sich ein deutlich verbesserter Verfestigungseffekt, der jedoch besonders deutlich dann in Erscheinung tritt, wenn in den aufeinanderfolgenden Scherköpfen eine voneinander verschiedene Wickelgeschwindigkeit und insbesondere eine entgegengesetzte Wickelrichtung zur Anwendung gelangt.

Die Erfindung betrifft des weiteren einen Scherkopf zur Herstellung eines fadenverstärkten, polymeren Schlauches bei dem Verfahren nach Anspruch 1, umfassend ein Gehäuse zur Befestigung vor der Austrittsöffnung eines Extruders, eine in dem Gehäuse angeordnete Lochdüse und einen der Lochdüse koaxial zugeordneten und um seine Achse drehbaren Scherdorn.

Ein Scherkopf dieser Art befindet sich in der praktischen Verwendung. Das Aufwickeln des Fadens auf den Formkern wird dabei außerhalb des Scherkopfes vorgenommen, was eine unbefriedigende Einbindung in den verwendeten; polymeren Werkstoff zur Folge hat.

Hiervon ausgehend liegt der Erfindung die weitere Aufgabe zugrunde, einen Scherkopf dieser Art derart weiterzuentwickeln, daß eine verbesserte Einbindung des verwendeten Verstärkungsfadens in den verwendeten polymeren Werkstoff gewährleistet ist.

Diese Aufgabe wird erfindungsgemäß dadurch gelöst, daß der Scherdorn eine koaxiale Durchtrittsöffnung aufweist, daß erste Mittel zur kontinuierlichen Verschiebung eines durch die Durchtrittsöffnung zugeführten Formkernes in Richtung der Lochdüse vorgesehen sind sowie zweite Mittel zur kontinuierlichen Zuführung und zum Umwickeln des Form-kernes mit mindestens einem Verstärkungsfaden, daß die zweiten Mittel eine Fadenführung umfassen und daß die Fadenführung den Scherdorn zudringt und mindestens eine Mündung aufweist, die die der Lochdüse zugewandte Stirnfläche des Scherdornes unterbricht. Der Scherdorn befindet sich unter normalen Betriebsbedingungen in einer ständigen, kontinuierlichen Drehbewegung, wodurch der aus der Mündung austretende Verstärkungsfaden kontinuierlich in den die Mündung in flüssigem bzw. pastösem Zustand überspülenden Werkstoff eingebettet wird. Der nunmehr den Verstärkungsfaden enthaltende Gummiwerkstoff wird unmittelbar anschließend an den Formkern angeformt und der Lochdüse zugeleitet, in welcher der erzeugte, fadenverstärkte Schlauch seine Außenkontur erhält. Diese wird durch die gleichzeitig einsetzenden Vulkanisationsvorgänge stabilisiert und durch eine gegebenenfalls zur Anwendung gelangende, thermische Nachbehandlung auf an sich bekannte Weise bleibend fixiert.

Im Hinblick auf die Gewährleistung einer möglichst reibungsfreien Fadenführung hat es sich als vorteilhaft bewährt, wenn die Mündung derselben der Durchtrittsöffnung möglichst dicht benachbart ist. Insbesondere einem Rückstau des zum Zeitpunkt der Einbettung des Verstärkungsfadens in einem flüssigen bzw. niederviskosen Zustand befindlichen, polymeren Werkstoffes in Richtung der Fadenführung läßt sich hierdurch in vielen Fällen wirksam begegnen. Auch eine Ausführung, bei der die Mündung der Fadenführung in Richtung der Durchtrittsöffnung offen ist, kann unter diesem Gesichtspunkt in die Überlegungen mit einbezogen werden.

Die Mündung der Fadenführung kann eine Achse aufweisen, die mit dem Steigungswinkel des auf den Formkern aufgewickelten Versteifungsfadens im wesentlichen übereinstimmt. Ein Abknicken des Verstärkungsfadens aus der Mündung wird hierdurch verhindert und damit die Ausnutzung der Tragfähigkeit des Verstärkungsfadens im Sinne der Erzielung einer optimalen Armierung des erhaltenen Schlauches begünstigt.

Im Hinblick auf die Erzielung besonders großer Arbeitsgeschwindigkeiten ist es auch möglich, die Fadenführung mit mehreren Mündungen zu versehen, wobei die Mündungen in diesem Falle gleichmäßig auf den Umfang der Stirnfläche des Scherdornes verteilt sein sollten.

Eine beispielhafte Ausführung des erfindungsgemäßen Scherkopfes ist in der als Anlage beigefügten Zeichnung dargestellt. Sie wird nachfolgend näher erläutert:

Der gezeigte Scherkopf dient zur Herstellung eines fadenverstärkten, polymeren Schlauches bei dem vorstehend beschriebenen Verfahren. Der Scherkopf besteht aus dem Gehäuse 1, das vor der Austrittsöffnung eines Extruders 2 befestigt ist. In dem Gehäuse 1 ist eine Lochdüse 3 angeordnet sowie ein der Lochdüse 3 koaxial zugeordneter und um seine Achse drehbarer Scherdorn 4, der mit einem eigenen Antrieb versehen ist. Der Scherdorn weist eine koaxiale Durchtrittsöffnung 5 auf sowie erste Mittel 6 zur kontinuierlichen Verschiebung eines durch die Durchtrittsöffnung 5 zugeführten Formkernes 7 in Richtung der Lochdüse 3 sowie zweite Mittel 8 zur kontinuierlichen Zuführung und zum Umwickeln des Formkernes 7 mit mindestens einem Verstärkungsfaden 9, die eine Fadenführung 10 umfassen. Die Fadenführung 10 durchdringt den Scherdorn und weist bei dem dargestellten Ausführungsbeispiel zwei Mündungen 11 auf, die die der Lochdüse 3 zugewandte Stirnfläche 12 des Scherdornes 4 unterbricht. Die zugeführten Verstärkungsfäden werden von Spulen entnommen und kontinuierlich in die Fadenführung 10 eingespeist. Sie folgen dadurch unter normalen Betriebsbedingungen der Drehbewegung des Scherdornes 4, was nach dem Austreten aus den stirnseitigen Mündungen 11 des Scherdornes selbsttätig zum Aufwickeln auf den kontinuierlich axial in Pfeilrichtung verschobenen Formkern 7 unter Erzeugung spiraliger Windungen führt. Es versteht sich von selbst, daß der Formkern 7 in bezug auf den Scherdorn 4 eine abweichende Drehgeschwindigkeit haben muß und sich bevorzugt in nichtdrehendem Zustand befindet.

Die Mündungen 11 der Fadenführung 10 haben einen radialen Abstand von der Durchtrittsöffnung 5, wodurch der aus den Mündungen austretende Verstärkungsfaden in den in einem flüssigen bzw. pasteusen Zustand befindlichen Werkstoff eingebettet wird. Sofern es sich bei diesem um Gummi handelt, wird die Drehgeschwindigkeit des Scherdornes 4 und die Temperierung des Scherkopfes so eingestellt, daß sich noch innerhalb des Scherkopfes eine Temperaturerhöhung auf Vulkanisationstemperatur ergibt. Der Werkstoff erfährt dadurch im Anschluß an die zum Zeitpunkt der Einbringung des Verstärkungsfadens minimale Viskosität bereits beim Austreten aus der Lochdüse 3 eine deutliche Verfestigung, die ihren Abschluß bei gleichbleibender Temperatur in kurzer Zeit erfährt. Sofern nicht die Aufbringung einer weiteren, fadenverstärkten Schicht beabsichtigt ist, kann daher unmittelbar anschließend die Abkühlung und Entnahme des Formkernes vorgenommen werden. Der fadenverstärkte, polymere Schlauch ist damit fertiggestellt und kann seiner bestimmungsmäßen Verwendung zugeführt werden.

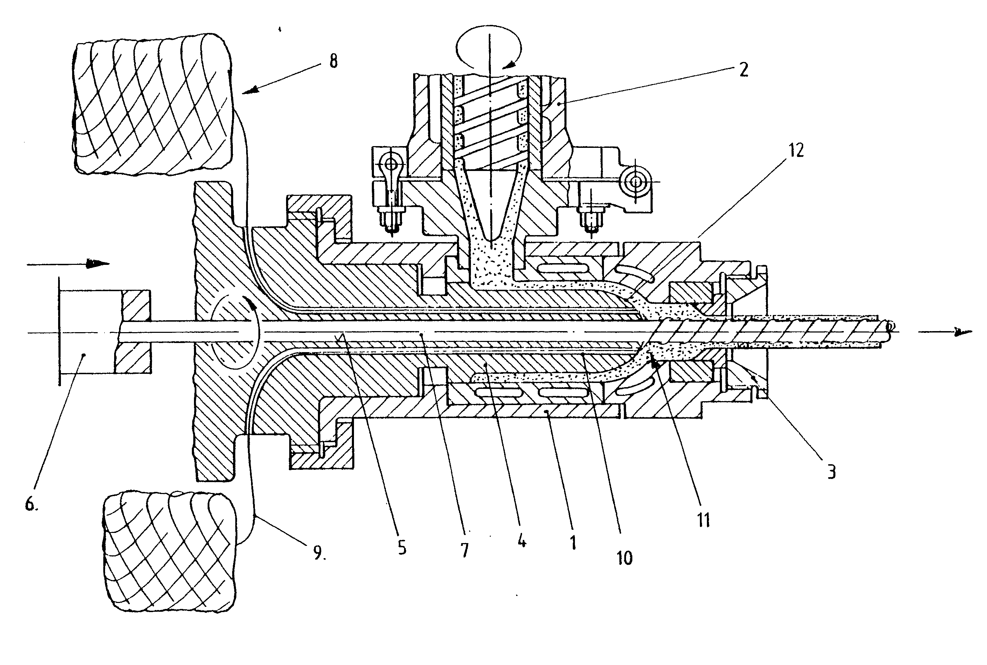

## Ansprüche

1. Verfahren zur Herstellung eines fadenverstärkten Schlauches aus Gummi, bei dem die Ausgangsmischung in formbarem Zustand kontinuierlich fortschreitend in einen Scherkopf eingespeist, mit Hilfe eines Formkernes zu dem Schlauch geformt, durch Aufwickeln eines Verstärkungsfadens und durch Erhitzen auf Vulkanisierungstemperatur verfestigt und der Formkern (7) anschließend entfernt wird, dadurch gekennzeichnet, daß der Verstärkungsfaden (9) innerhalb des Scherkopfes um den Formkern (7) gewickelt und gleichzeitig in die Wandung des Schlauches eingebracht wird, daß die Erhitzung der Ausgangsmischung auf Vulkanisationstemperatur in dem Scherkopf bewirkt wird und daß die Erhitzung so vorgenommen wird, daß sich zum Zeitpunkt des Einbringens des Verstärkungsfadens in die Wandung des Schlauches eine vorübergehende Absenkung der Viskosität der Ausgangsmischung ergibt.

2. Scherkopf zur Herstellung eines fadenverstärkten Schlauches aus Gummi bei dem Verfahren nach Anspruch 1, umfassend ein Gehäuse zur Befestigung vor der Austrittsöffnung eines Extruders, eine in dem Gehäuse angeordnete Lochdüse und einen der Lochdüse koaxial zugeordneten und um seine Achse drehbaren Scherdorn, dadurch gekennzeichnet, daß der Scherdorn (4) eine koaxiale Durchtrittsöffnung (5) aufweist, daß erste Mittel (6) zur kontinuierlichen Verschiebung eines durch die Durchtrittsöffnung (5) zugeführten Formkernes (7) in Richtung der Lochdüse (3) vorgesehen sind sowie zweite Mittel (8) zur kontinuierlichen Zuführung und zum Umwickeln des Formkernes (7) mit mindestens einem Verstärkungsfaden (9), daß die zweiten Mittel eine Fadenführung (10) umfassen und daß die Fadenführung (10) den Scherdorn (4) durchdringt und mindestens eine Mündung (11) aufweist, die die der Lochdüse zugewandte Stirnfläche (12) des Scherdornes (4) unterbricht.

3. Scherkopf nach Anspruch 2, dadurch gekennzeichnet, daß die Mündung (11) der Fadenführung (10) der Durchtrittsöffnung (5) dicht benachbart ist.

4. Scherkopf nach Anspruch 2 bis 3, dadurch gekennzeichnet, daß die Mündung (II) der Fadenführung (10) in Richtung der Durchtrittsöffnung (5) offen ist.

5. Scherkopf nach Anspruch 2 bis 3, dadurch gekennzeichnet, daß die Mündung (11) der Fadenführung (10) eine Achse aufweist, die mit dem Steigungswinkel des auf den Formkern (7) aufgewickelten Verstärkungsfadens (9) im wesentlichen übereinstimmt.

6. Scherkopf nach Anspruch 2 bis 4, dadurch gekennzeichnet, daß mehrere Mündungen (11) der Fadenführung (10) vorgesehen sind und daß die Mündungen (11) gleichmäßig auf dem Umfang der Stirnfläche (12) verteilt sind.

## Claims

1. A process for producing a filament-reinforced rubber hose, wherein the starting mixture is continuously and progressively fed in a mouldable state into a shear head, moulded with the aid of a mould core into a hose and consolidated by wrapping with a reinforcing filament and by heating to the vulcanization temperature, and the mould core (7) is then removed, characterized in that the reinforcing filament (9) is wound within the shear head around the mould core (7) and at the same time introduced into the wall of the hose, in that the heating of the starting mixture to the vulcanization temperature is effected within the shear head, and in that the heating is carried out in such a way that at the time of the reinforcing filarnent being introduced into the wall of the hose there is a temporary reduction in the viscosity of the starting mixture.

2. A shear head for producing a filament-reinforced rubber hose by the process according to claim I, comprising a housing for attachment upstream of the exit opening of an extruder, a hole die arranged within the housing, and an axially rotatable shear mandrel arranged coaxially with the hole die, characterized in that the shear mandrel (4) possesses a coaxial passage (5), in that first means (6) are provided for the continuous shifting of a mould core (7), guided through the passage (5), in the direction of the hole die (3) as are second means (8) for the continuous advancement of the mould core (7) and for wrapping it with at least one reinforcing filament (9), and in that the second means comprise a filament guide (10), and in that the filament guide (10) passes through the shear mandrel (4) and has at least one outlet (11) which interrupts that end face (12) of the shear mandrel (4) which faces the hole die.

3. A shear head according to claim 2, characterized in that the outlet (11) of the filnt guide (10) is closely adjacent to the passage (5).

4. A shear head according to clad 2 or 3, characterized in that the outlet (11) of the filament guide (10) is open in the direction of the passage (5).

5. A shear head according to clad 2 or 3, characterized in that the outlet (11) of the filnt guide (10) has an axis which essentially conforms to the pitch angle of the reinforcing filnt (9) wrapped around the mould core (7).

6. A shear head according to clad 2 to 4, characterized in that a plurality of outlets (11) of the filament guide (10) are provided, and in that the outlets (11) are in uniform distribution over the extent of the end face (12).

**Revendications**

1. Procédé de fabrication d'un flexible en caoutchouc renforcé par filaments, dans lequel 1e mélange initial est amené en continu à l'état plastique dans une tête de cisaillement, est mis en forme de flexible à l'aide d'un noyau de formage, est renforcé par le bobinage d'un filament de renfort et par chauffage à la température de vulcanisation tandis que le noyau de formage <7) est ensuite enlevé, caractérisé en ce que le filament de renforcement <9) est bobiné autour du noyau de formage <7) à l'intérieur de la tête de cisaillement et est incorporé simultanément dans la paroi du flexible, que le chauffage du mélange initial à la température de vulcanisation est provoqué dans la tête de cisaillement et que le chauffage est effectué de façon à ce que, au moment de l'incorporation du filament de renforcement dans la paroi du flexible, il se produise une diminution temporaire de la viscosité du mélange initial.

2. Tête de cisaillement pour la fabrication d'un flexible en caoutchouc renforcé par filaments selon le procédé de la revendication 1, comprenant un boîtier à fixer devant l'orifice de sortie d'une extrudeuse, une tuyère perforée disposée dans le boîtier et un poinçon de cisaillement monté coaxialement par rapport à la tuyère perforée et pouvant tourner autour de son axe, caractérisée en ce que le poinçon de cisaillement (4) présente un orifice de passage coaxial (5), que des premiers moyens <6) sont prévus pour déplacer en continu un noyau de formage (7) amené à travers l'orifice de passage 5 en direction de la tuyère perforée (3) ainsi que des deuxièmes moyens (8) pour amener en continu et pour bobiner autour du noyau de formage (7) au moins un filament de renforcement (9), que les deuxièmes moyens comprennent un guide de fil (10) et que le guide de fil (10) pénètre dans le poinçon de cisaillement (4) et présente au moins un orifice (11) qui interrompt la surface frontale (12) du poinçon de cisaillement (4) tournée vers la tuyère perforée.

3. Tête de cisaillement selon la revendication 2, caractérisée en ce que l'orifice (11) du guide de fil (10) est situé à proximité de l'orifice de passage (5).

4. Tête de cisaillement selon les revendications 2 et 3, caractérisée en ce que l'orifice (11) du guide de fil (10) est ouvert en direction de l'orifice de passage (5).

5. Tête de cisaillement selon les revendications 2 et 3, caractérisée en ce que l'orifice (11) du guide de fil (10) présente un axe qui correspond essentiellement à l'angle de pente du filament de renforcement (9) bobiné sur le noyau de formage (7).

6. Tête de cisaillement selon les revendications 2 à 4, caractérisée en ce qu'il est prévu plusieurs orifices (11) du guide de fil (10) et que les orifices (11) sont répartis uniformément sur la périphérie de la surface frontale (12).